# EUROPÄISCHE PATENTANMELDUNG

(11) **EP 1 179 744 A1**
(43) Veröffentlichungstag der Anmeldung: **13.02.2002**
(21) Anmeldenummer: 00116968.9
(22) Anmeldetag: 07.08.2000
(51) Int. Cl.: G02B 6/38

(54) **Ferrule für einen Lichtwellenleiter und Verfahren zum Befestigen einer Ferrule an einem Lichtwellenleiter**

(71) Anmelder: Tyco Electronics Logistics AG, 9323 Steinach / SG (CH)
(72) Erfinder: Bauer, Jürgen, 68159 Manheim (DE); Löffelholz, Stefan, 64653 Lorsch (DE)
(74) Vertreter: Hirsch, Peter, Dipl.-Ing.

(57) **Zusammenfassung**

Eine erfindungsgemäße Ferrule (4) für einen Lichtwellenleiter (1) zeichnet sich dadurch aus, daß die Ferrule (4) und der Lichtwellenleiter (1) aus Kunststoff hergestellt sind und daß die Ferrule (4) durch Umspritzen an einem Mantel (2, 3) des Lichtwellenleiters (1) ausgebildet wird. Das erfindungsgemäße Verfahren zum Befestigen einer Ferrule (4) an einem Lichtwellenleiter (1) umfaßt die folgenden Schritte: wahlweise axial bereichsweises Abisolieren eines Mantels (2, 3) eines Endes des zylindrischen Lichtwellenleiters (1) und Entfernen eines radialen Teils des Mantels (2, 3) des Lichtwellenleiters (1); Anordnen dieses Endes des Lichtwellenleiters (1) in einem Spritzwerkzeug (5); und Ausbilden der Ferrule (4) auf dem Mantel (2, 3) oder auf dem abisolierten Bereich des verbliebenen Mantels (3) des Lichtwellenleiters (1) durch Umspritzen.

## Beschreibung

Die vorliegende Erfindung betrifft eine Ferrule für einen Lichtwellenleiter und ein Verfahren zum Befestigen einer Ferrule an einem Lichtwellenleiter.

Bei der Kopplung von elektrooptischen Sendern, wie zum Beispiel LED's und Laserdioden und elektrooptischen Empfängern, wie zum Beispiel Photodioden und Phototransistoren mittels einer lichtleitenden Faser, oder bei der optischen Verbindung von zwei getrennten Lichtwellenleitern (z.B. aus Kunststoff) miteinander, ergibt sich das Problem, daß die Stirnflächen der lichtleitenden Fasern zu den korrespondierenden Sende- oder Empfangsflächen sehr genau in Position gebracht und gehalten werden müssen. Dabei müssen die optischen Achsen präzise zur Deckung gebracht werden und sehr nahe aneinander anschließen, d.h. sie müssen sowohl in radialer als auch in axialer Richtung exakt positioniert werden.

Um eine einwandfreie Ankopplung eines Lichtwellenleiters zu einem Sender oder zu einem Empfänger oder eine einwandfreie Kopplung Faser/Faser zu gewährleisten, wird bei den bekannten optischen Steckverbindungen das Ende des Lichtwellenleiters mit einem Röhrchen, einer sogenannten Ferrule (auch Insert genannt) konfektioniert.

Die Befestigung der Ferrule auf bzw. an dem Lichtwellenleiter muß zugfest erfolgen, ohne dabei den Lichtwellenleiter zu beschädigen oder gar seine optischen Eigenschaften zu beeinflussen.

Bekannte Befestigungen an einem Lichtwellenleiter stellen zu diesem eine Verbindung her, indem beispielsweise eine Crimpverbindung an den Lichtwellenleiter angebracht wird. Hierbei besteht jedoch die Gefahr, daß der Lichtwellenleiter beschädigt wird oder die optischen Eigenschaften negativ beeinflußt werden.

Eine weitere bekannte Art der Anbringung einer Steckverbindung an einem Lichtwellenleiter ist aus der DE 41 14 156 A1 bekannt. Dort wird der Steckverbinder direkt auf den Kern des Lichtwellenleiters aufgespritzt bzw. dort umgossen, so daß eine Beeinträchtigung der optischen Eigenschaften des Lichtwellenleiters nicht ausgeschlossen werden kann.

Demgegenüber ist es die Aufgabe der vorliegenden Erfindung, eine Ferrule für einen Lichtwellenleiter bzw. ein Verfahren zum Befestigen einer Ferrule an einem Lichtwellenleiter zu schaffen, wobei eine sichere Befestigung der Ferrule an dem Lichtwellenleiter, auch bei einer Verwendung in einem Kraftfahrzeug, für hohe Ausziehkräfte gegeben ist. Zudem sollte eine optische Dämpfung nicht auftreten und die Fertigung mittels des Verfahrens kurze Taktzeiten erlauben und geringe Kosten verursachen.

Diese Aufgabe wird durch eine Ferrule für einen Lichtwellenleiter gemäß dem Patentanspruch 1 gelöst bzw. durch ein Verfahren gemäß Patentanspruch 9 gelöst.

Demnach zeichnet sich eine erfindungsgemäße Ferrule für einen Lichtwellenleiter dadurch aus, daß die Ferrule aus Kunststoff hergestellt wird und an einem Mantel des Lichtwellenleiters durch Umspritzen ausgebildet wird.

Darüber hinaus umfaßt das erfindungsgemäße Verfahren zum Befestigen der Ferrule an dem Lichtwellenleiter die folgenden Schritte:
- Anordnen eines Endes des Lichtwellenleiters in einem Spritzwerkzeug; und
- Ausbilden der Ferrule auf dem Ende eines Mantels des Lichtwellenleiters durch Umspritzen.

Besonders vorteilhaft ist es, wenn vor dem Umspritzen mit der Ferrule der Mantel axial bereichsweise am Endes des zylindrischen Lichtwellenleiters abisoliert wird und entfernt wird, und zwar in radialer Richtung des Mantels gesehen.

Vorteilhafte Weiterbildungen der Ferrule und des Verfahrens sind jeweils in den Unteransprüchen angeführt.

Die wesentlichen Vorteile nach der vorliegenden Erfindung sind wie folgt:
- Hochfeste Verbindung zwischen Ferrule und Mantel des Lichtwellenleiters, da diese beiden Teile einstückig ausgebildet werden;
- Die Ferrule kann kostengünstig in Spritzgußtechnik gefertigt werden;
- Wirtschaftliche Kabelkonfektionierung und Fertigung der Ferrule in einem Arbeitsgang;
- Hoher Automatisierungsgrad bei der Montage möglich;
- Spitzgußtechnik sehr wirtschaftlich einsetzbar; und
- Keine Beeinträchtigung der optischen Eigenschaften des Lichtwellenleiters.

Eine erfindungsgemäße Ferrule für einen Lichtwellenleiter und das erfindungsgemäße Verfahren zum Befestigen einer Ferrule an einem Lichtwellenleiter sind in den Zeichnungen dargestellt.

Diese zeigen in:
- Fig. 1: eine Querschnittansicht eines Lichtwellenleiters mit einer aufgespritzten Ferrule im Längsschnitt;
- Fig. 2: drei Querschnittansichten von links nach rechts: der Lichtwellenleiter (LWL) mit Mantel; dieser LWL eingelegt in das Werkzeug zum Umspritzen; der LWL mit der umspritzten Ferrule; und
- Fig. 3: eine Querschnittansicht des Lichtwellenleiters und der aufgespritzten Ferrule mit bearbeiteter Stirnfläche des LWL.

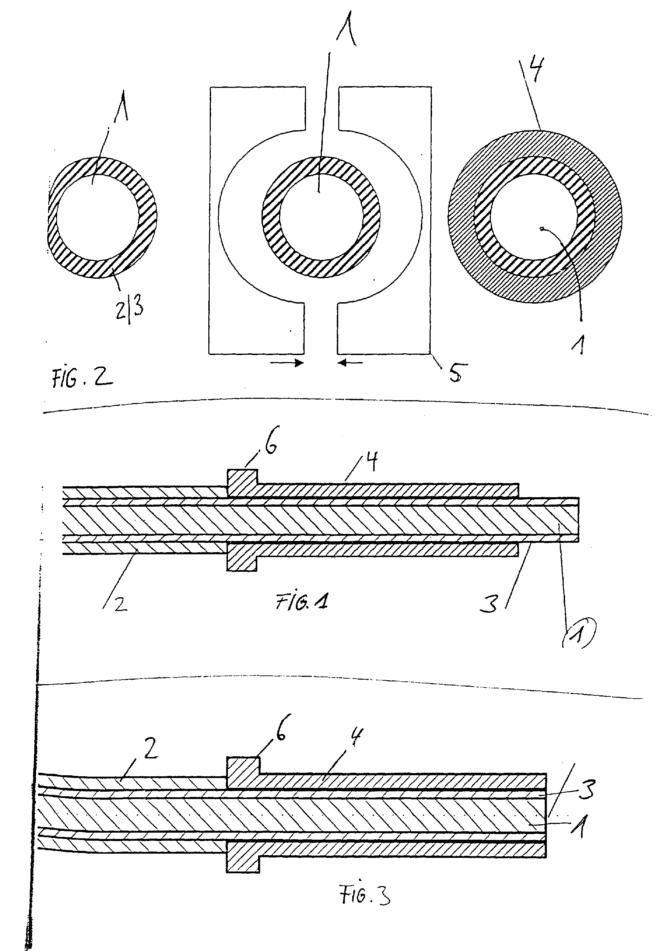

In der Figur 1 ist eine Ferrule 4 aus einem Kunststoffmaterial an einem Lichtwellenleiter 1 angeordnet dargestellt, der ebenfalls aus einem Kunststoffmaterial gefertigt ist.

Der Lichtwellenleiter 1 weist in der dargestellten Ausführungsform einen lichtleitenden Kern sowie einen zweischaligen Mantel auf, der aus einem Außenmantel 2 und aus einem Innenmantel 3 besteht.

Dieser zweischalige bzw. zweischichtige Aufbau des Mantels des Lichtwellenleiters 1 aus Außenmantel 2 und Innenmantel 3 ist für die vorliegende Erfindung nicht zwingend erforderlich; ausschlaggebend ist, daß für die Anbringung der Ferrule 4 ein gewisser Puffer in radialer Richtung zur Verfügung steht, der bei der Befestigung der Ferrule 4 eine Beschädigung des Kerns des Lichtwellenleiters 1 sicher verhindert.

Im Falle der in der Figur 1 gezeigten Ferrule 4 wird also zunächst der Außenmantel 2 des Lichtwellenleiters 1 in einem Bereich abisoliert, der etwa der axialen Länge der später dort angebrachten Ferrule 4 entspricht. Der abisolierte Bereich ist vorzugsweise geringfügig länger als die Ferrule 4, so daß ein kleines Stück des Lichtwellenleiters 1 über die Ferrule 4 übersteht. In der Figur 1 ist dieses überstehende Stück des Lichtwellenleiters 1 auf der rechten Seite der Zeichnung dargestellt.

Am linken Ende der Ferrule 4 wird ein Bund 6 ausgebildet, der zum Beispiel als Anschlag dient, wenn die Ferrule 4 als Steckverbinder eingesetzt wird.

Nicht dargestellt ist eine Ausführungsform, bei der einstükkig mit der Ferrule 4 zumindest ein Rasthaken oder eine Federzunge ausgebildet ist, die zum Einrasten des Steckverbinders bzw. der Ferrule 4 dient.

Somit ist der Kern des Lichtwellenleiters 1 beim Aufbringen und bei aufgebrachter Ferrule 4 durch den Innenmantel 3 geschützt.

In der Figur 2 ist in drei Querschnittansichten von links nach rechts dargestellt, wie zuerst der Lichtwellenleiter 1 mit dem Mantel 2 und 3 vorliegt, wonach dieser Lichtwellenleiter 1 in ein Werkzeug 5 zum Umspritzen eingelegt wird; anschließend wird das Werkzeug 5 geschlossen (in Pfeilrichtung); und schließlich wird mittels Umspritzen des Lichtwellenleiters 1 in dem Werkzeug 5 die Ferrule 4 ausgebildet.

Je nach geforderten Festigkeiten der Verbindung zwischen Ferrule 4 und Lichtwellenleiter 1 können mehr oder weniger lange Bereiche am Lichtwellenleiter 1 umspritzt werden.

Die Umspritzung erfolgt bei der gezeigten Ausführungsform am Außenumfang des Innenmantels 3 (siehe Figur 1).

Beim eigentlichen Umspritzen des Innenmantel 3 (d.h. des Schutzmantels für den Kern des Lichtwellenleiters 1) des Lichtwellenleiters 1 wird nur der Kunststoff am Innenmantel 3 aufgeschmolzen und es wird keine nennenswerte Beeinträchtigung an dem Kern des Lichtwellenleiters 1 bewirkt. Da die lichtleitende Faser nicht mechanisch verformt wird, wie etwa beim Crimpen oder direkt umspritzt wird, wie etwa in der DE-OS 41 14 156, ist keine störende Erhöhung der optischen Dämpfung damit verbunden. Die Auszugskraft der Ferrule relativ zum Lichtwellenleiter 1 wird hauptsächlich durch die Güte des Stoffschlusses zwischen Ferrule 4 und Mantel des Lichtwellenleiters bestimmt.

Die Innenfläche der durch Umspritzen ausgebildeten Ferrule 4 (d.h. die Form des Werkzeugs 5) kann eine glatte Oberfläche aufweisen oder kann auch nicht glatt ausgeführt sein, dann mit Vertiefungen, Aussparungen, Rippen, Stegen, etc. Dadurch kann gegebenenfalls die Ausbildung dieser Verbindung erleichtern werden.

Ein schnelles Spritzgußverfahren bringt den Vorteil mit sich, daß eine Beschädigung des Kerns des Lichtwellenleiters 1 ausgeschlossen werden kann.

In der Figur 3 ist das fertig bearbeitete Endstück des Lichtwellenleiters 1 mit Ferrule 4 dargestellt. Die Stirnfläche des Lichtwellenleiters 1 ist auf die Länge der Ferrule 4 gekürzt und endbearbeitet.

Die Stirnfläche kann abgeschnitten, geschliffen oder mit einem Laser geglättet sein.

Eine erfindungsgemäße Ferrule 4 für einen Lichtwellenleiter 1 zeichnet sich demnach dadurch aus, daß die Ferrule 4 und der Lichtwellenleiter 1 aus Kunststoff hergestellt sind und daß die Ferrule 4 durch Umspritzen an einem Mantel 2, 3 des Lichtwellenleiters 1 ausgebildet wird. Das erfindungsgemäße Verfahren zum Befestigen einer Ferrule 4 an einem Lichtwellenleiter 1 umfaßt die folgenden Schritte: Anordnen eines Endes des Lichtwellenleiters 1 in einem Spritzwerkzeug 5; und Ausbilden der Ferrule 4 auf diesem Bereich eines Mantels 3 des Lichtwellenleiters 1 durch Umspritzen.

Optional wird vor dem Umspritzen ein Teil des Mantels 2, 3 des Lichtwellenleiters 1 abisoliert.

Bezüglich weiterer Merkmale und Vorteile der vorliegenden Erfindung wird ausdrücklich auf die zugehörigen Zeichnungen und Patentansprüche verwiesen.

## Patentansprüche

1. Ferrule (4) aus Kunststoff für einen Lichtwellenleiter (1) aus Kunststoff,
**dadurch gekennzeichnet, daß**
die Ferrule (4) auf einem Mantel (2, 3) des Lichtwellenleiters (1) durch Umspritzen ausgebildet ist.

2. Ferrule (4) nach Anspruch 1,
**dadurch gekennzeichnet, daß**
die Ferrule (4) im wesentlichen eine hohlzylindrische Form aufweist, wobei der Lichtwellenleiter (1) durch den Hohlraum verläuft.

3. Ferrule (4) nach Anspruch 1 oder 2,
**dadurch gekennzeichnet, daß**
die Ferrule (4) im Berührungsbereich mit dem Mantel (2, 3) des Lichtwellenleiters (1) eine nicht glatte Oberfläche aufweist.

4. Ferrule (4) nach Anspruch 1 oder 2,
**dadurch gekennzeichnet, daß**
die Ferrule (4) im Berührungsbereich mit dem Mantel (2, 3) des Lichtwellenleiters (1) eine glatte Oberfläche aufweist.

5. Ferrule (4) nach einem der Ansprüche 1 bis 4,
**dadurch gekennzeichnet, daß**
der Mantel (2, 3) des Lichtwellenleiters (1) einen Außenmantel (2) und einen Innenmantel (3) aufweist, wobei im Bereich der Umspritzung mit der Ferrule (4) der Außenmantel (2) vorher entfernt wird.

6. Ferrule (4) nach einem der Ansprüche 1 bis 5,
**dadurch gekennzeichnet, daß**
die Ferrule (4) an dem Ende, welches dem Ende des Lichtwellenleiters (1) gegenüberliegt, einen Bund (6) aufweist oder daß die Ferrule (4) mit zumindest einem Rasthaken versehen ist, der beim Umspritzen mit ausgebildet wird.

7. Ferrule (4) nach einem der Ansprüche 1 bis 6,
**dadurch gekennzeichnet, daß**
der Mantel (2, 3) des Lichtwellenleiters (1) einteilig ist und im Bereich der Umspritzung mit der Ferrule (4) vorher teilweise entfernt wird.

8. Ferrule (4) nach einem der Ansprüche 1 bis 7,
**dadurch gekennzeichnet, daß**
durch das Umspritzen der Mantel (2, 3) des Lichtwellenleiters (1) teilweise aufgeschmolzen wird und mit der Ferrule (4) eine nicht lösbare Verbindung herstellt.

9. Verfahren zum Befestigen einer Ferrule (4) aus Kunststoff an einem Lichtwellenleiter (1) aus Kunststoff, **gekennzeichnet durch** die Schritte:
- Anordnen eines Endes des Lichtwellenleiters (1) in einem Spritzwerkzeug (5); und
- Ausbilden der Ferrule (4) auf einem Mantel (2, 3) des Lichtwellenleiters (1) **durch** Umspritzen.

10. Verfahren nach Anspruch 9,
**gekennzeichnet durch** den folgenden Schritt:
Axial bereichsweises Abisolieren des Mantels (2, 3) am Ende des zylindrischen Lichtwellenleiters (1) und Entfernen eines radialen Teils des Mantels (2, 3) des Lichtwellenleiters (1) vor dem Einlegen in das Spritzwerkzeug (5).

11. Verfahren nach Anspruch 9 oder 10,
**gekennzeichnet durch** den Schritt:
Abisolieren eines Außenmantels (2) des Lichtwellenleiters (1), so daß ein Innenmantel (3) freigelegt wird, an dem die Ferrule (4) **durch** Umspritzen ausgebildet wird.

12. Verfahren nach einem der Ansprüche 9 bis 11, **gekennzeichnet durch** den Schritt:
Umspritzen eines Teils des Außenmantels (2) des Lichtwellenleiters (1) bei der Ausbildung der Ferrule (4).

13. Verfahren nach einem der Ansprüche 9 bis 12, **gekennzeichnet durch** den Schritt:
Abisolieren des Mantels (2, 3) des Lichtwellenleiters (1), so daß sich eine glatte Oberfläche am Mantel (2, 3) ergibt.

14. Verfahren nach einem der Ansprüche 9 bis 12, **gekennzeichnet durch** den Schritt:
Abisolieren des Mantels (2, 3) des Lichtwellenleiters (1), so daß sich eine nicht glatte Oberfläche am Mantel (2, 3) ergibt.

15. Verfahren nach einem der Ansprüche 9 bis 14, **gekennzeichnet durch** den Schritt:
Glätten der Stirnfläche des Lichtwellenleiters (1) nach dem Umspritzen.
